# EUROPÄISCHE PATENTANMELDUNG

(11) **EP 1 396 183 A1**
(43) Veröffentlichungstag der Anmeldung: **10.03.2004**
(21) Anmeldenummer: 03019883.2
(22) Anmeldetag: 02.09.2003
(51) Int. Cl.: A01B 35/24

(54) **Überlastsicherung für landwirtschaftliche Maschinen**

(30) Priorität: 03.09.2002 DE 20213736 U
(71) Anmelder: Hendlmeier, Konrad, D-93107 Untersanding (DE)
(72) Erfinder: Hendlmeier, Konrad, D-93107 Untersanding (DE)
(74) Vertreter: Wasmeier, Alfons, Dipl.-Ing.

(57) **Zusammenfassung**

Zur Erzielung einer Überlast- oder Steinsicherung für Scharstiele von Bodenbearbeitungsmaschinen wird eine auf Druck ansprechende Auslöse-Federanordnung (10,15,16) vorgesehen, die mit der Überlast-Blattfeder (2) zusammenwirkt und mit ihr parallel geschaltet zwischen Einspannstelle der Überlast-Blattfeder und der Scharspitze eingespannt ist. Die Auslöse-Federanordnung ist beispielsweise in Form von Blattfedern (10), Druckfedern (15) oder elastisch nachgiebigen Puffern (16) ausgebildet.

## Beschreibung

Die Erfindung betrifft eine Überlast- oder Steinsicherung nach dem Oberbegriff des Anspruches 1.

Bei landwirtschaftlichen Maschinen zur Bodenbearbeitung, wie z.B. Grubbern mit Hohlscheiben und Flügelscharen, muss zur Überlastsicherung insbesondere bei steinigen Böden die Möglichkeit geschaffen werden, dass die Schare mit Zinken beim Auftreffen auf ein Hindernis, z.B. einen Steinbrocken, nach oben ausweichen und wieder in die Ausgangsstellung zurückgeführt werden. Dies geschieht z.B. mit Hilfe einer Überlastsicherung, die hydraulischer oder mechanischer Art sein kann, insbesondere aber als Federsystem ausgebildet ist. Herkömmliche, bekannte Ausführungen, die mit auf Zug arbeitenden Federn arbeiten, weisen eine Anzahl von Gelenken auf, die hoch beansprucht werden und damit fortlaufend beschädigt und erneuert werden müssen. Eine andere Art von Federsystemen arbeitet mit Blattfedern, die z.B. in S-Form ausgeführt sind, wobei das obere Ende des S am Maschinenrahmen befestigt ist und das untere Ende des S die Scharspitze aufnimmt. Zweckmäßigerweise sind die beiden Hälften einer solchen Überlast- Blattfeder nicht einstückig, sondern aus zwei Teilen ausgeführt, die etwa mittig einander überlappend miteinander verschraubt sind. Eine derartige Ausführung mit S-förmigen Blattfedern stellt eine besonders einfache Ausführungsform einer Überlastsicherung dar, mit der jedoch der Anfangsauslösedruck der Feder nicht definiert ist.

Aufgabe der Erfindung ist deshalb, die bekannten Überlast-Blattfederanordnungen für die Überlastsicherung bzw. Steinsicherung bei landwirtschaftlichen Bodenbearbeitungsmaschinen so zu verbessern, dass eine definierte Auslösung bei hohem Widerstand mit möglichst einfachen Mitteln erreicht wird.

Diese Aufgabe wird mit den Merkmalen des Kennzeichens des Anspruches 1 gelöst. Weitere Ausgestaltungen der Erfindung sind Gegenstand der Unteransprüche.

Das mit der Erfindung gelöste Problem besteht darin, dass bei herkömmlichen Überlast-Blattfedern, die für Überlast-Sicherungen im Einsatz sind, bereits eine sehr geringe, gegen das Schar wirkende Kraft ausreicht, um ein Auslenken der Überlast-Blattfeder zu erreichen, und dass mit zunehmendem Ausschlag die aufzubringende Kraft für weitergehende Auslenkungen zunimmt. Dieses Problem wird dadurch gelöst, dass beim Auftreffen eines Scharelementes auf ein Hindernis zu Beginn das zusätzliche Federelement in Form der Auslöse-Federanordnung der Auslenkung der Überlast-Blattfeder einen hohen Widerstand entgegensetzt, da die eingespannte, Erfindungsge-mäße Auslöse-Blattfeder oder eine entsprechende Druckfeder oder ein elastischer Federblock ein hohes Widerstandsmoment gegen eine Auslenkbewegung ausübt, dass dieses Widerstandsmoment in dem Federsystem gespeichert wird, und dass schließlich bei Überschreiten eines eingeprägten Wertes das Federsystem auslenkt bzw. ausweicht und dabei die Überlast-Blattfeder aufgrund der gespeicherten Energie eine hohe Auslösekraft erzeugt, die ihrerseits einen hohen Auslösedruck auf das Hindernis ausübt. Entscheidend ist dabei, dass die Überlast-Blattfeder eine Verkürzung bzw. Kompression erfährt und die hierdurch entstehende Energie gespeichert sowie die Auslöse-Feder gespannt wird; die Auslöse-Feder gibt bei Erreichen eines eingeprägten Vorspannwertes die gespeicherte Energie frei und löst die Vorspannung der Überlast-Blattfeder frei.

Nachstehend wird die Erfindung in Verbindung mit der Zeichnung anhand von Ausführungsbeispielen erläutert. Es zeigt:
- Fig. 1: eine Ausführungsform der Erfindung mit planer Auslöse-Blattfederanordnung,
- Fig. 2: eine andere Ausführungsform der Erfindung mit Druckfederanordnung, und
- Fig. 3: eine weitere Ausführungsform der Erfindung mit elastischem Puffer.

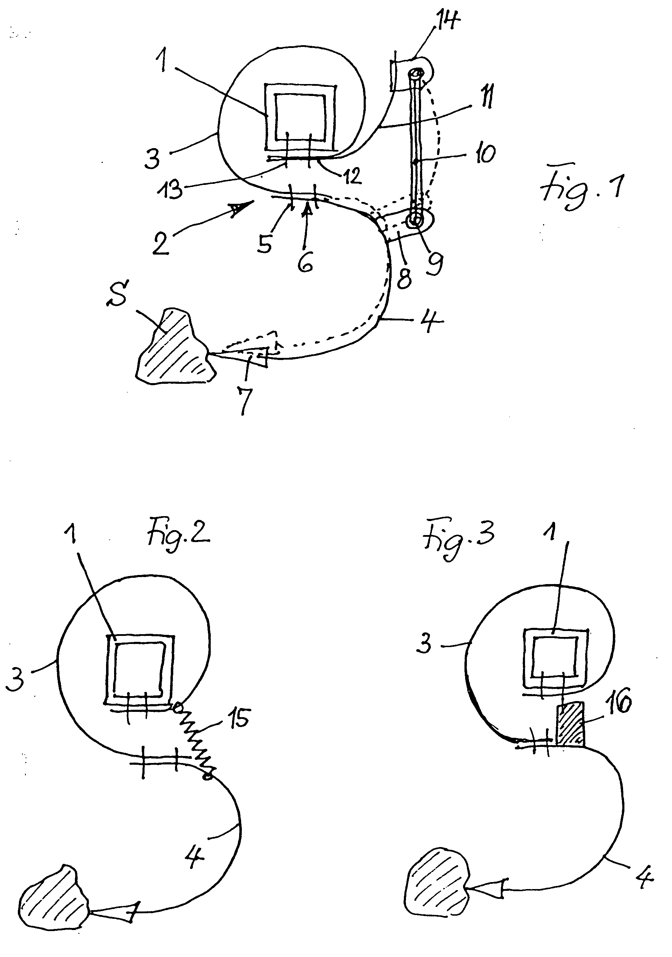

Fig. 1 zeigt einen Trägerbalken 1 eines Maschinenrahmens einer landwirtschaftlichen Maschine, an dem ein Ende des oberen Abschnittes 3 einer Überlast- Blattfeder 2 befestigt ist. Das freie Ende des Abschnittes 3 ist bei 5 mit dem Ende des unteren Abschnittes 4 befestigt, z.B. verschraubt, dessen entgegengesetztes Ende das Schar 7 aufnimmt. Im oberen Bereich des Federabschnittes 4 ist eine Tragstütze 8 befestigt, die eine Aufnahmelasche 9 für eine oder mehrere gerade bzw. plane Auslöse-Blattfedern 10 aufweist. Mit dem Träger 1 des Maschinenrahmens ist ein Zwischenträger 12 (z.B. zusammen mit dem Ende des oberen Federabschnittes 3) befestigt, z.B. verschraubt, der ebenso wie die Überlast-Blattfeder aus Federstahl besteht, der nach oben gewölbt ist und der eine Lasche 14 zur Aufnahme des zweiten Endes der planen Blattfeder 10 aufn i mmt.

Trifft die Scharspitze 7 bei der Bodenbearbeitung auf ein Hindernis S, setzt die Überlast-Blattfeder 2 aufgrund der eingeprägten Vorspannung durch die Auslöse-Blattfeder 10 einer Auslenkung einen erheblichen Widerstand entgegen, solange, bis die eingeprägte Vorspannung der Federan 10 überwunden wird und die Feder 10 auslenkt. Damit wird die in der Überlast-Blattfeder gespeicherte Federkraft freigesetzt und wirkt auf das Hindernis S im Sinne einer Beseitigung oder Auslenkung.

Bei der Ausführungsform nach Fig. 2 ist anstelle einer oder mehrerer planer Auslöse-Blattfedern 10, die zwischen Träger 11 und Trägerstütze 8 eingespannt sind, eine (oder wahlweise mehrere) Druckfeder 15 eingesetzt, die in analoger Weise wie die Federanordnung 10 in Fig. 1 wirksam wird. Bei dieser Ausführung ist auf einen Zwischenträger 11 verzichtet, das eine Ende der Druckfeder 15 vielmehr unmittelbar mit dem oberen Abschnitt 3 der Überlast-Blattfeder 2 in der Nähe der Befestigungsstelle am Träger 1 verbunden.

Die Ausführungsform nach Fig. 3 weist am oberen Abschnitt 4 der Überlast-Blattfeder 2 einen elastisch nachgiebigen Block 16 auf, der mit dem oberen Abschnitt 3 der Überlast-Blattfeder 2 an der Befestigungsstelle mit dem Träger 1 zusammenwirkt und bei Auftreffen der Scharspitze 7 auf ein Hindernis S zur Erzielung des erhöhten Anfangsauslösedruckes komprimiert wird.

## Patentansprüche

1. Überlast- oder Steinsicherung für Scharstiele von Bodenbearbeitungsmaschinen mit am Maschinenrahmen befestigten Überlast- Blattfedern, die am bodenseitigen Ende die Scharspitze aufnehmen, **dadurch gekennzeichnet, dass** eine auf Druck ansprechende Auslöse-Federanordnung (10) mit der Überlast-Blattfeder (2) zusammenwirkend und parallel geschaltet vorgesehen ist, die zwischen der Einspannstelle der Überlast-Blattfeder (2) und der Scharspitze (7) eingespannt ist, derart, dass der Auslösedruck der Überlast-Blattfeder (2) bei hohem Widerstand zur Erzielung einer definierten Auslösung veränderbar ist.

2. Überlastsicherung nach Anspruch 1, **dadurch gekennzeichnet, dass** die Auslöse-Federanordnung (10) aus mindestens einer planen, auslenkbaren Blattfeder besteht.

3. Überlastsicherung nach Anspruch 1, **dadurch gekennzeichnet, dass** die Auslöse-Federanordnung (10) aus mindestens einer Druckfeder (15) besteht.

4. Überlastsicherung nach Anspruch 1, **dadurch gekennzeichnet, dass** die Auslöse-Federanordnung (10) ein elastisch nachgiebiger Puffer (16) ist, der gegen einen Festanschlag der Überlast-Blattfeder (2) zusammendrückbar ist.

5. Überlastsicherung nach einem der Ansprüche 1-4, **dadurch gekennzeichnet, dass** ein Ende der Auslöse-Federanordnung (10) mit einem mit dem festgelegten Ende (12) der Überlast-Blattfeder (2) befestigten Trägerarm (11 ) verbunden ist.

6. Überlastsicherung nach Anspruch 1 oder 5, **dadurch gekennzeichnet, dass** die beiden Enden der planen Auslöse-Federanordnung (10 jeweils mit einer auf dem Trägerarm (11 ) und am oberen Ende des unteren Abschnittes der Überlast-Blattfeder befestigten Lasche (14) eingespannt sind.
